# EUROPEAN PATENT APPLICATION

(11) **EP 4 790 362 A1**
(43) Date of publication of application: **12.08.2026**
(21) Application number: 25217687.0
(22) Date of filing: 21.11.2025
(51) Int. Cl.: G01B 21/04, G01B 11/24

(54) **MEASURING A PART USING DEPTH DATA**

(30) Priority: 07.02.2025 US 202519048724
(71) Applicant: The Boeing Company, Arlington, VA 22202 (US)
(72) Inventor: KASPER, Kristine Marie, Arlington, 22202 (US); KELSEY, William D., Arlington, 22202 (US); SMITH, Brian James, Arlington, 22202 (US); WEATHERSBY, Ethan, Arlington, 22202 (US); MIDDLETON, Mitchell S., Arlington, 22202 (US); VALBUENA, Miguel Angel, Arlington, 22202 (US)
(74) Representative: Morrall, Jonathan Ian McLachlan

(57) **Abstract**

One example provides a measurement system (1200) for a part (106, 902, 1304). The measurement system (1200) comprises a part support (1202) arranged along a scan path (1302), a measurement head (1208), a plurality of depth sensors (102A, 102B, 1204) arranged on the measurement head (1208), and a calibration monument (1214, 1500) arranged along the scan path (1302). The calibration monument (1214, 1500) including a plurality of features (1502) representative of part geometry on the part (106, 902, 1304). The measurement system(1200) further comprises a controller(1224) configured to obtain, from the plurality of depth sensors, depth data of the calibration monument and the part along the scan path (1602), determine a calibration measurement for the plurality of features of the calibration monument from the depth data (1620), and when calibration measurement meets a predetermined calibration condition, determine a part measurement for the part from the depth data (1624).

## Description

### CROSS REFERENCE TO RELATED APPLICATIONS

This application is a continuation-in-part of and claims priority to U.S. Patent Application No. 18/448,053 entitled MEASURING A PART USING DEPTH DATA, filed on August 10, 2023, the entirety of which is hereby incorporated herein by reference for all purposes.

### BACKGROUND

Part inspection helps to ensure the quality, reliability, and safety of parts. In many instances, trained individuals visually examine and assess the quality, integrity, and compliance of various parts with specific parameters, and identify any defects, deviations, or abnormalities. An inspection process can involve identification of measurement points on the part, for example referencing engineering drawings to determine measurement start and end points. The measurement itself can be performed using a variety of tools, such as a tape measure, calipers, and thickness gauges. The inspection process can also include human visual inspection of cutter lines, smearing & chip welding, mismatches, gouges, elongated holes, missing or mis-located components, and identification of other defects.

### SUMMARY

One example provides a measurement system for a part. The measurement system comprises a part support arranged along a scan path, a measurement head, a plurality of depth sensors arranged on the measurement head, and a calibration monument arranged along the scan path. The calibration monument includes a plurality of features representative of part geometry on the part. The measurement system further comprises a controller configured to obtain, from the plurality of depth sensors, depth data of the calibration monument and the part along the scan path, determine a calibration measurement for the plurality of features of the calibration monument from the depth data, and when the calibration measurement meets a predetermined calibration condition, determine a part measurement for the part from the depth data.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 shows an example of a system for obtaining a measurement of a part using depth data from a plurality of sensors.
FIG. 2 shows a block diagram of an example system configured to obtain a measurement of a part using depth data from a plurality of sensors.
FIG. 3 illustrates an example of point cloud data including a connected point cloud and a plurality of outliers.
FIG. 4 shows a plurality of planes extracted from the connected point cloud of FIG. 3.
FIG. 5 shows an example of a rotational alignment of a plane.
FIG. 6 shows a flow diagram of an example method for performing a rotational alignment.
FIG. 7 shows an example of a translational alignment of the plane of FIG. 5.
FIG. 8 shows an example plot of aligned depth data for the part of FIG. 1.
FIG. 9 shows another example of a part.
FIGS. 10A-10C illustrate cross-sectional views of the part of FIG. 9.
FIGS. 11A-11C show a flow diagram of an example method for obtaining a measurement of a part using depth data from a plurality of sensors.
FIG. 12 shows a block diagram of another example measurement system for measuring a part.
FIG. 13 schematically depicts an example arrangement of components of the measurement system of FIG. 12 along a scan path.
FIG. 14 schematically depicts an example depth sensor utilizing an angular offset relative to a scan path.
FIG. 15 schematically depicts an example calibration monument.
FIG. 16 shows a flow diagram of an example method for operating the measurement system of FIG. 12 for measuring a part.
FIG. 17 is a block diagram of an example computing system.

### DETAILED DESCRIPTION

As introduced above, in many instances, part inspection involves human visual inspection and manual measurement of parts. For example, measurements of a part can be performed using tools such as a tape measure and calipers to determine dimensions across multiple sections of the part. This process requires the person performing the measurement to be familiar with the inspection plan and engineering drawings, and to maintain precision across different parts which can vary in length from less than one foot to over 100 feet. This is labor intensive, repetitive, and can require an extensive amount of time to perform accurately. For example, inspection of a 100-foot-long aircraft stringer can take around 1-10 hours.

In some instances, laser measurement devices can be used to determine one or more dimensions of a part. However, reflections can reduce the accuracy of such measurement devices. Furthermore, these measurement devices require a physical calibration of the sensor's mechanical mounting structure, precise part mounting, and controlled temperature conditions to obtain reliable measurements. It can also be challenging to obtain measurements of multiple dimensions and to maneuver a part in multiple degrees of freedom during the measurement process.

Accordingly, examples are disclosed that relate to using depth data from a plurality of depth sensors for determining one or more measurements of a part. Briefly, depth data of a calibration monument and the part are obtained from the plurality of depth sensors. The calibration monument includes a plurality of features that are representative of part geometry on the part to be measured. Further, one or more calibration measurements are determined for the plurality of features of the calibration monument from the depth data and evaluated against a predetermined calibration condition. When it is determined that the calibration measurement(s) meet the predetermined calibration condition, the part measurement(s) for the part are determined from the depth data. Therefore, the calibration monument helps to enable validating the calibration of the plurality of depth sensors as part of a measurement plan for the part. In some examples, an alignment of the plurality of depth sensors can be evaluated in a likewise manner using an alignment monument.

This process provides for automated, repeatable measurement(s) of parts within a suitable tolerance (e.g., 0.01 inches or less). This process also reduces time required to measure parts and increases inspection throughput. For example, an aircraft stringer inspection can be performed in five minutes or less in some examples.

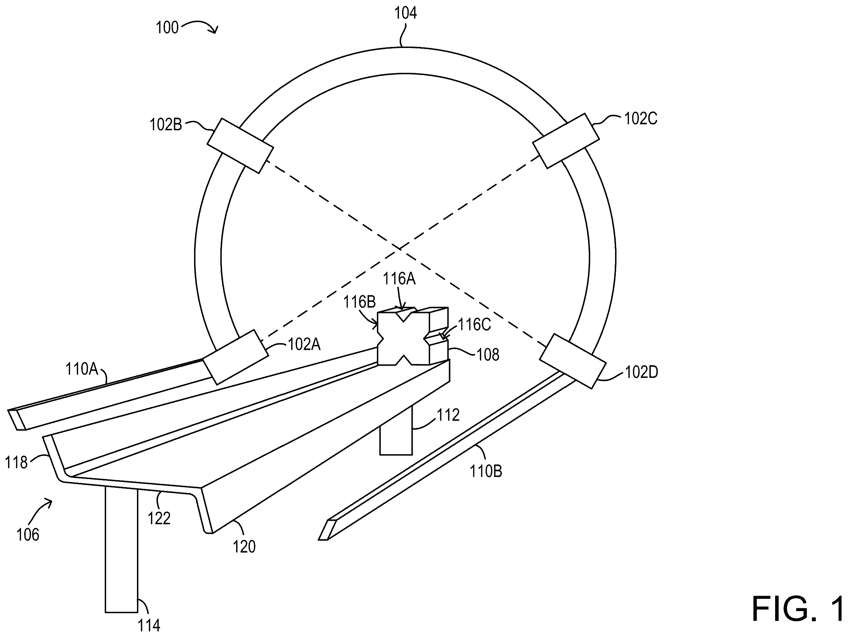

FIG. 1 shows an example of a system 100 for obtaining a measurement of a part. The system 100 comprises a plurality of depth sensors 102A, 102B, 102C, and 102D. In other examples, any other suitable number of depth sensors can be used, such as two, three, five, ten, or more depth sensors.

In some examples, each of the depth sensors 102A, 102B, 102C, and 102D comprises a light detection and ranging (LIDAR) sensor. In other examples, any other suitable depth sensor can be used. Another example of a suitable depth sensor includes a time-of-flight (ToF) depth camera.

In the depicted example, the depth sensors 102A, 102B, 102C, and 102D are mounted in a ring 104 at least partially surrounding a part 106 and a monument 108. In some such examples, the depth sensors 102A, 102B, 102C, and 102D are located at fixed positions relative to one another. The orientations of the depth sensors 102A, 102B, 102C, and 102D are selected such that the depth sensors 102A, 102B, 102C, and 102D can image both the part 106 and the monument 108. The positions and orientations of the depth sensors enables depth data obtained from each of the depth sensors to be aligned to a common coordinate system. In other examples, the sensors can be arranged in any other suitable pattern.

In some examples, the depth sensors 102A, 102B, 102C, and 102D are moveable with respect to the part 106. For example, the ring 104 is mounted on rails 110A and 110B. The rails 110A and 110B enable the ring 104 to be positioned at a predetermined cross-section of the part 106. In this manner, the depth sensors 102A, 102B, 102C, and 102D can obtain depth images along a length of the part 106. In other examples, the depth sensors can be stationary with respect to the part.

In some examples, the part 106 comprises an aircraft stringer. In other examples, the system 100 can be used to measure any other suitable object. Other examples of suitable objects include tubes, ducts, metal parts (e.g., aluminum, titanium, or steel parts), and composite parts (e.g., carbon fiber parts). The system 100 can also have applications beyond the aerospace industry, including automotive, rail, maritime, energy, and engineering applications, or any other applications where inspection of tolerances is required during manufacture or service and inspection.

In some examples, the system 100 includes a pogo mounting and clamping system. The pogo mounting and clamping system comprises a first mount 112 and a second mount 114. The first mount 112 is configured to clamp and hold a portion of the part 106 during a scan in one direction. The second mount 114 is configured to clamp the part 106 at a different location during a scan in an opposite direction. Sensor sequencing is calibrated accordingly. For example, the depth sensors 102A, 102B, 102C, and 102D, the first mount 112, and the second mount 114 can be sequenced based on a CAD (computer aided design) file or a digital inspection plan. This enables automation of the part scanning process.

The monument 108 comprises a real-world object with at least three non-parallel faces 116A, 116B, and 116C. The faces 116A, 116B, and 116C serve as a reference by which depth data output from the depth sensors 102A, 102B, 102C, and 102D can be aligned. In the example illustrated in FIG. 1, the monument 108 comprises an X-shaped block. In other examples, the monument 108 can have any other suitable geometry. Other examples of suitable monuments include triangular, pyramidal, and trapezoidal monuments. In further examples, a cylindrical monument with tooling balls located at various locations on a cylindrical body can be used.

Dimensions of each of the faces 116A, 116B, and 116C are machined within a suitable tolerance. In some examples, the faces 116A, 116B, and 116C have dimensions within a tolerance of 0.005-inch or less. In some more specific examples, the faces 116A, 116B, and 116C have dimensions within a tolerance of .0005-inch or less. In further more specific examples, the faces 116A, 116B, and 116C have dimensions within a tolerance of .0003-inch or less. This allows assembly of an accurate, aligned set of depth data to produce a 3D digital twin of the part 106.

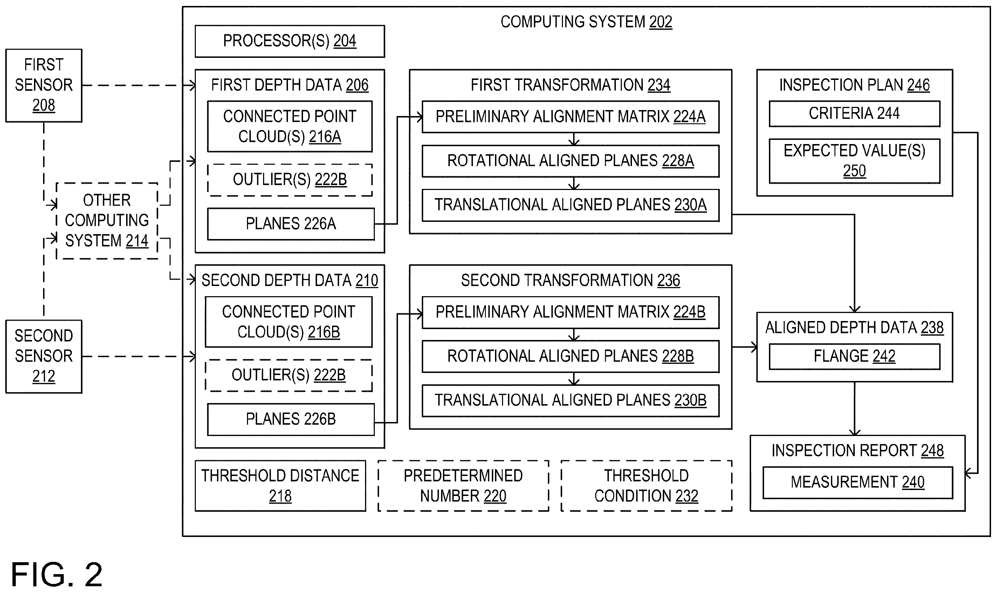

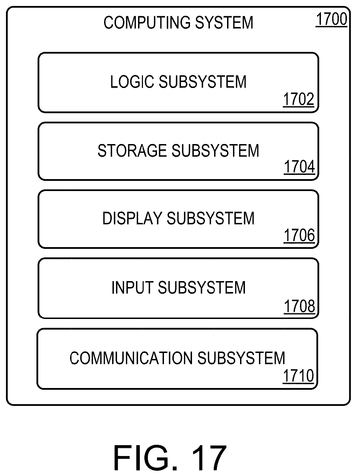

FIG. 2 shows an example of a computing system 202 configured to obtain a measurement of a part using depth data from a plurality of sensors, such as the depth sensors 102A, 102B, 102C, and 102D of FIG. 1. In some examples, the computing system 202 comprises one or more server computing devices. In other examples, the computing system 202 comprises any other suitable computing system. Other examples of suitable computing systems include desktop computing devices and laptop computing devices. Additional aspects of the computing system 202 are described in more detail below with reference to FIG. 17.

The computing system 202 comprises one or more processors 204. The one or more processors 204 are configured to obtain depth data of the monument and the part from the plurality of depth sensors. The computing system 202 is configured to obtain at least first depth data 206 from a first sensor 208 and second depth data 210 from a second sensor 212. In some examples, the first depth data 206 and the second depth data 210 are received from the first sensor 208 and the second sensor 212 in real time. In other examples, the first depth data 206 and the second depth data 210 are received from another computing system 214, such as a cloud storage server.

In some examples, the computing system 202 is configured to identify one or more connected point clouds 216A, 216B in the first depth data 206 and the second depth data 210, respectively. A connected point cloud comprises a plurality of three-dimensional coordinates. Each coordinate of the plurality of three-dimensional coordinates is located within a threshold distance 218 of another coordinate within the connected point cloud.

In some examples, the threshold distance 218 is a predefined distance. In some such examples, the threshold distance 218 is within a range of 0-1 inch. In some more specific examples, the threshold distance 218 is within a range of 0.01 - 0.5 inch. In further more specific examples, the threshold distance 218 is within a range of 0.1-0.2 inch.

In other examples, the threshold distance 218 is a function of a predetermined number 220 of coordinates in each connected point cloud 216A, 216B. In some such examples, the threshold distance 218 is selected such that each connected point cloud 216A, 216B contains the predetermined number 220 of coordinates. In some examples, the predetermined number 220 of coordinates is in a range of 5,000 - 500,000. In some more specific examples, the predetermined number 220 of coordinates is in a range of 10,000 - 100,000. In further more specific examples, the predetermined number 220 of coordinates is in a range of 10,000 - 15,000. The threshold distance 218 can be selected in any suitable manner. Some examples of suitable methods to define the connected point clouds 216A, 216B include k-means clustering and Gaussian multi-modal analysis. In this manner, discrete surfaces can be identified within the connected point clouds 216A, 216B.

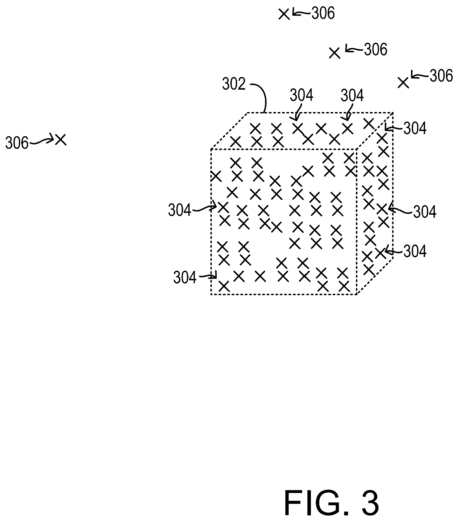

The computing system 202 is optionally configured to remove outliers 222A, 222B from the first depth data 206 and/or the second depth data 210, respectively. The outliers 222A, 222B comprise coordinates within the first depth data 206 and the second depth data 210, if any, that are outside the threshold distance 218 from another coordinate. FIG. 3 shows a schematic example of a connected point cloud 302 comprising a plurality of coordinates 304. FIG. 3 also illustrates outliers 306 that are outside of the connected point cloud 302. Removal of the outliers 306 reduces a size of the depth data in a memory of a computing device and thereby also reduces processing time for subsequent transformation and/or analysis of the depth data. The removal of the outliers 306 also enables precise segmentation of a part or assembly in a desired measurement location.

With reference again to FIG. 2, the computing system 202 is further configured to rotate one or more of the first depth data 206 and the second depth data 210 by an installation angle of a respective sensor 208, 212. In some examples, this is accomplished by applying a first static preliminary alignment matrix 224A to the first depth data 206. The first static preliminary alignment matrix 224A is configured to rotate the first depth data 206 by an installation angle of a first depth sensor. A second static preliminary alignment matrix 224B is applied to the second depth data 210. The second static preliminary alignment matrix 224B is configured to rotate the second depth data 210 by an installation angle of a second depth sensor. For example, depth data obtained from the first depth sensor 102A of FIG. 1 can be rotated by 125 degrees around a central axis of the ring 104. Depth data obtained from the second depth sensor 102B can be rotated by 55 degrees in a same direction around the central axis of the ring 104. Rotating the depth data from each depth sensor by an installation angle of a respective sensor can approximate rotational alignment of the depth sensors suitably close to ensure accurate plane detection and alignment, as described in more detail below.

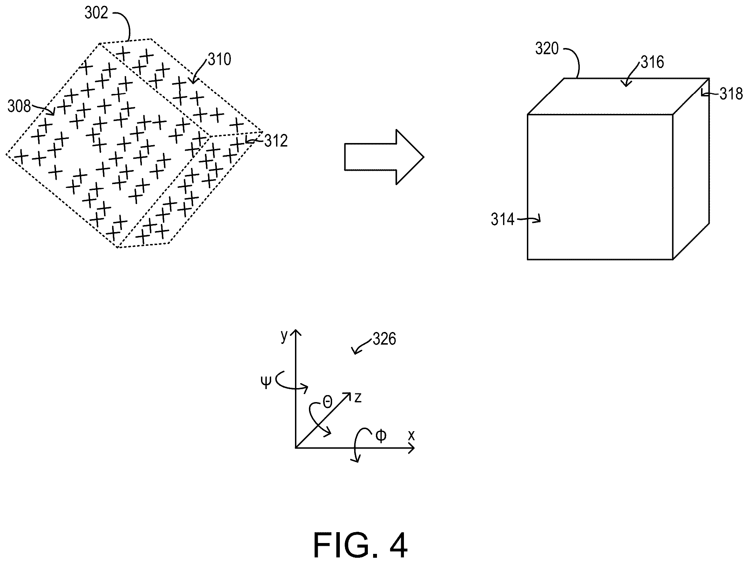

The computing system 202 is further configured to detect a plurality of planes 226A, 226B in the first depth data 206 and the second depth data 210, respectively. Each plane of the plurality of planes 226A, 226B corresponds to a corresponding face on a monument (e.g., the monument 108 of FIG. 1). For example, FIG. 4 shows a plurality of planes 308, 310, 312 in the connected point cloud 302 of FIG. 3. Each plane 308, 310, 312 corresponds to a corresponding face 314, 316, 318, respectively, on a monument 320. The planes can be detected in any suitable manner. One example of a suitable method for detecting the planes 226A, 226B of FIG. 2 is a least-squares best-fit method. Recognizing the planes that correspond to the monument enables the computing system to align the first depth data and the second depth data to a common coordinate system.

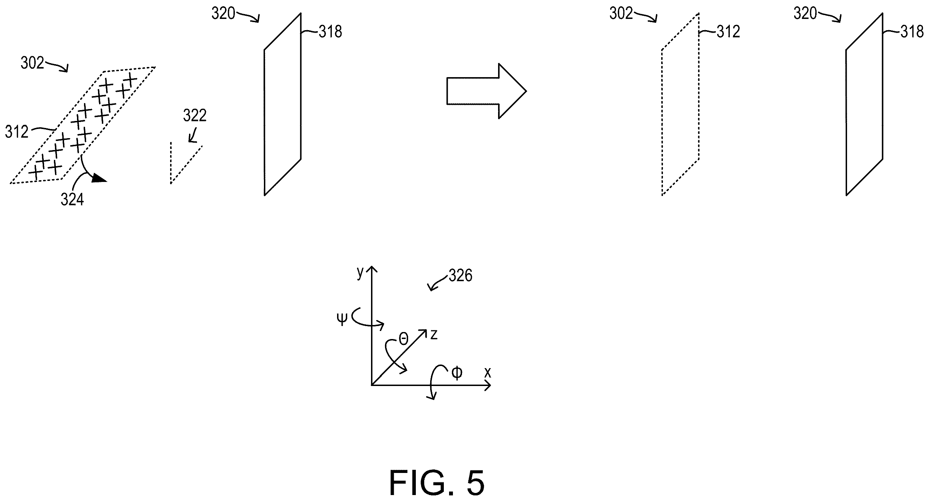

Each plane of the plurality of planes 226A, 226B is rotationally aligned to a corresponding face on the monument as indicated at 228A and 228B, respectively. For example, FIG. 5 shows the plane 312 of FIG. 4. The plane 312 is rotated to align parallel to a known orientation of its corresponding face 318 on the monument 320.

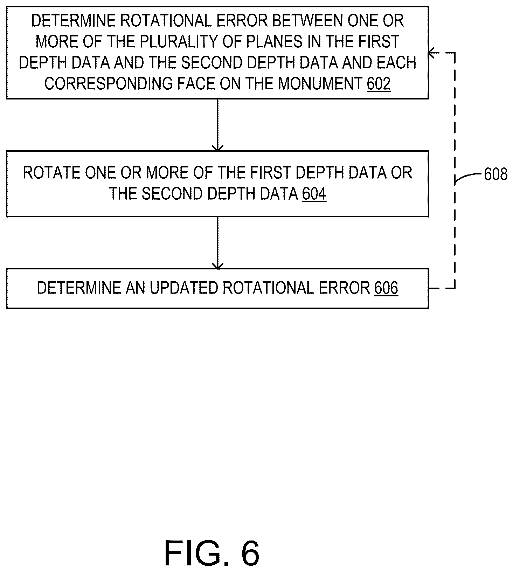

In some examples, the rotational alignment is performed in one or more iterative steps. FIG. 6 illustrates an example method 600 for performing rotational alignment of depth data. At 602, the method 600 comprises determining rotational error between one or more of the plurality of planes in the first depth data and the second depth data and each corresponding face on the monument. FIG. 5 shows an example of rotational error 322 between the plane 312 and the corresponding face 318 on the monument 320.

At 604, the method 600 of FIG. 6 comprises rotating the one or more of the plurality of planes. For example, the plane 312 is rotated, as indicated at 324, to align its orientation to the face 318. In some examples, the rotation 324 comprises an incremental change in phi, psi, and/or theta in coordinate system 326.

Referring again to FIG. 6, the method 600 comprises determining an updated rotational error 322. The method 600 optionally comprises repeating one or more of steps 602-606, as indicated at 608. Steps 602-606 can be repeated any suitable number of times. In some examples, steps 602-606 are repeated until the updated rotational error is within a predetermined rotational error threshold. In some examples, the predetermined rotational error threshold is in a range of 0-1 degree. In some more specific examples, the predetermined rotational error threshold is in a range of 0-0.1 degree. In further more specific examples, the predetermined rotational error threshold is in a range of 0-0.01 degree. In this manner, the depth data is rotated until the rotational error is suitably low to obtain an accurate measurement of the part.

In other examples, steps 602-606 are repeated until a predetermined number of iterations is reached. In some examples, the predetermined number of iterations is within a range of 1-1000 iterations. In some more specific examples, the predetermined number of iterations is within a range of 1-100 iterations. In further more specific examples, the predetermined number of iterations is within a range of 10-100 iterations. In this manner, the rotational alignment can be terminated if the updated rotational error does not converge to the predetermined rotational error threshold within the predetermined number of iterations, thereby preventing the computing device performing the rotational alignment from entering a freeze or hang condition.

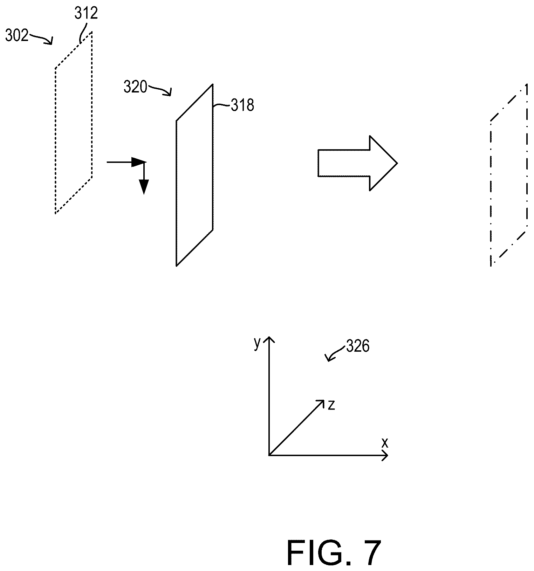

Referring again to FIG. 2, the computing system 202 is configured to perform a translational alignment of the rotationally aligned plurality of planes 228A, 228B, as indicated at 230A and 230B, respectively. FIG. 7 shows the plane 312 after the rotational alignment 324 of FIG. 5. In this manner, the plane 312 is substantially parallel with the corresponding face 318 on the monument 320. As illustrated by example in FIG. 7, the plane 312 is moved to align its position with a known position of the corresponding face 318 on the monument 320. Accordingly, after both the rotational and translational alignments, the plane 312 is aligned to the monument 320 in six degrees of freedom (e.g., in position with respect to the x, y, and z axes, as illustrated by example in FIG. 7, and in orientation with respect to phi, psi, and theta, as illustrated by example in FIG. 5).

In some examples, performing the translational alignment comprises translating one or more of the plurality of planes 226A, 226B in the first depth data 206 and the second depth data 210 until a distance between the one or more of the plurality of planes 226A, 226B and each corresponding face on the monument satisfies a threshold condition 232. In some examples, the threshold condition 232 comprises a shortest distance between each plane 226A, 226B (e.g., a length of a normal vector) and its corresponding face. In this manner, the plurality of planes is aligned to the monument.

The computing system 202 is further configured to determine one or more transformations that align the depth data to a common coordinate system based upon the rotational alignment and the translational alignment. As illustrated by example in FIG. 2, a first transformation 234 is determined for the first depth data 206 and a second transformation 236 is determined for the second depth data 210. The first transformation 234 and the second transformation 236 calibrate the first depth data 206 and the second depth data 210 to the common coordinate system based upon the rotational and translational transformations applied to the plurality of planes 226A, 226B, respectively.

The first and second transformations 234 and 236 are used to align the first depth data 206 and the second depth data 210 and thereby form aligned depth data 238. While the aligned depth data 238 is schematically illustrated as a single structure in FIG. 2, it will also be appreciated by one of ordinary skill in the art, without undue experimentation, that the aligned depth data 238 can alternatively comprise separate data structures (e.g., separate data structures for aligned depth data derived from the first depth data 206 and aligned depth data derived from the second depth data 210).

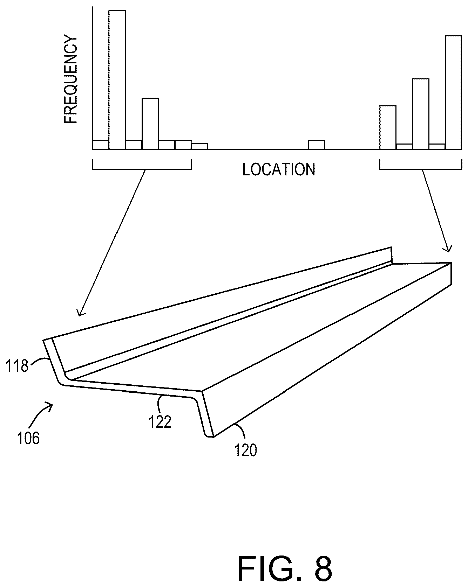

The computing system 202 is further configured to determine a measurement 240 of the part based upon the aligned depth data 238. In some examples, determining the measurement 240 of the part comprises identifying a flange 242 on the part, and determining the measurement 240 at a location of the flange 242. For example, the part 106 of FIG. 1 comprises a first flange 118 and a second flange 120 connected by web 122. FIG. 8 shows a histogram of aligned depth data by location on the part 106. For example, there is a larger quantity of depth data points clustered around the first flange 118 and the second flange 120 than at the web 122. In this manner, the first flange 118 and the second flange 120 can be extracted from the aligned depth data. This enables precise sectioning of the part in one or more desired measurement locations.

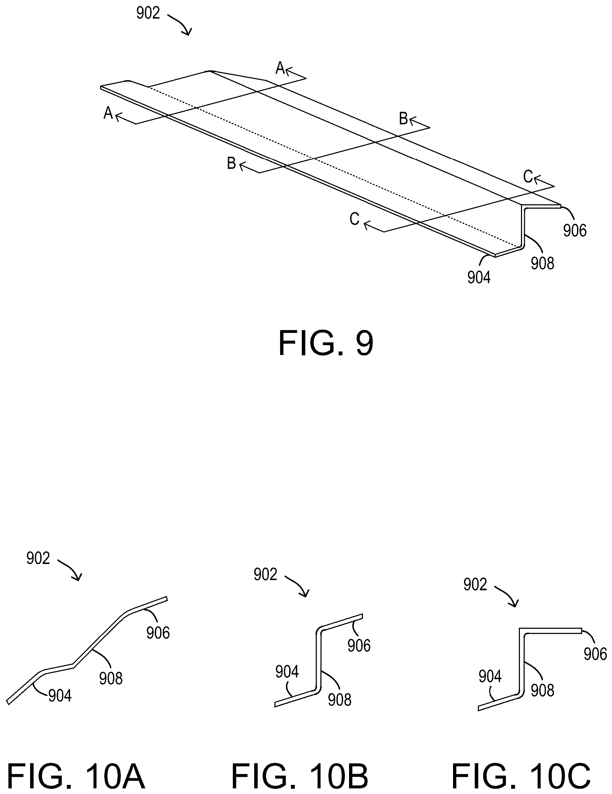

FIG. 9 shows another example of a part 902. As illustrated by example in FIG. 9, in some examples, the part 902 can sag during measurement. Residual stresses can also cause curves in the part. As such, it can be challenging to create a plane that accurately represents an entire surface of a first flange 904, a second flange 906, and/or a web 908. Accordingly, and in one potential advantage of the present disclosure, the aligned depth data for the part 902 can be cross-sectioned at measurement points of interest, as indicated at lines A-A, B-B, and C-C in FIG. 9. FIGS. 10A-10C show cross-sectional views of the part 902 at lines A-A, B-B, and C-C, respectively. The measurement can be determined for each cross-sectional portion of the part 902. Determining the measurement at multiple locations allows the computing system to obtain a more comprehensive representation of its dimensions. For example, an average height of the web 908 can be determined based upon two or more cross-sectional measurements. The average, and/or other statistical measures (e.g., mean and mode) can help eliminate or minimize the impact of individual measurement errors or variations in the dimensions of the part. Other statistical parameters, such as standard deviation or range, can be additionally or alternatively used to quantify the extent of any variability present in the measurement. Taking multiple measurements also enables the computing system to identify errors or biases in the measurement process, and reduces random error relative to the use of fewer measurements.

In some examples, the measurement 240 is determined for multiple locations on each part. Measurement criteria 244, such as measurement locations, can be specified in an inspection plan 246. While the inspection plan 246 is depicted at the computing system 202, it will also be appreciated by one of ordinary skill in the art, without undue experimentation, that the inspection plan 246 can be additionally or alternatively stored at another location, such as the other computing system 214 or a cloud storage database. In some examples, the depth sensors 102A-102B can be relocated to another position along an axis of measurement (e.g., by repositioning the ring 104 along the rails 110A, 110B) to obtain additional depth data of the part 106. In some such examples, depth data for a 100-foot-long part can be obtained and any suitable measurements extracted therefrom within five minutes. This enables accurate inspection of the part without risk of human error, and in a shorter amount of time than manual methods and/or the use of other measurement devices.

Referring again to FIG. 2, in some examples, the measurement 240 is determined within a tolerance of 0 - 0.01 inch. In some more specific examples, the measurement 240 is determined within a tolerance of 0 - 0.005 inch. In further more specific examples, the measurement 240 is determined within a tolerance of 0 - 0.001 inch. In this manner, the computing system 202 can output one or more measurements 240 that are at least comparable to an accuracy tolerance of manual inspection and/or other inspection tools, such as automated calipers or laser measurement devices.

In some examples, the measurement 240 is packaged in an inspection report 248. The inspection report 248 can additionally or alternatively include at least a portion of the inspection plan 246. For example, the inspection report 248 can include the measurement criteria 244, along with one or more expected values 250 for the measurement 240. In this manner, the inspection report 248 can serve as a reference for the inspection of the part.

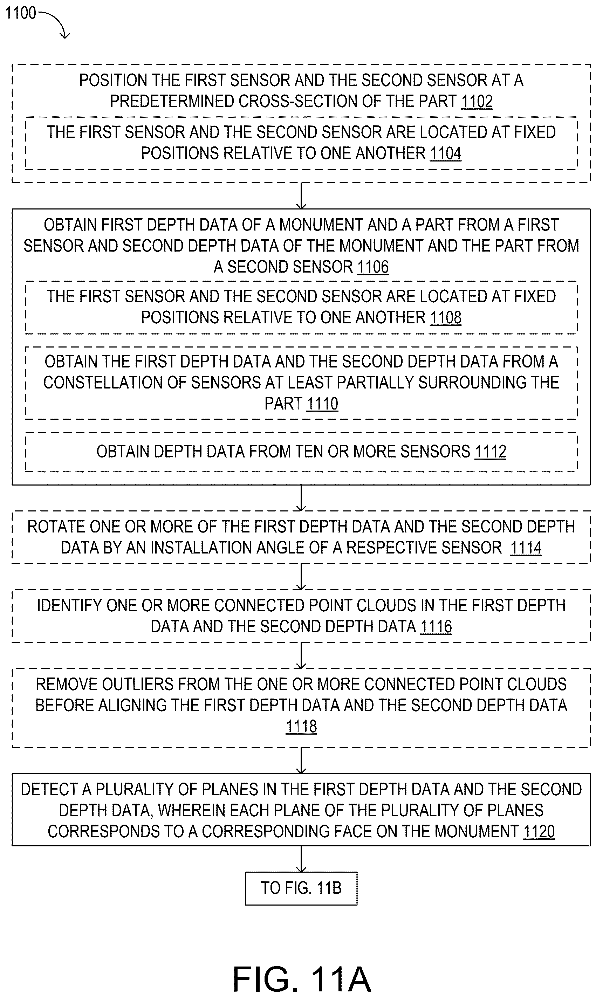

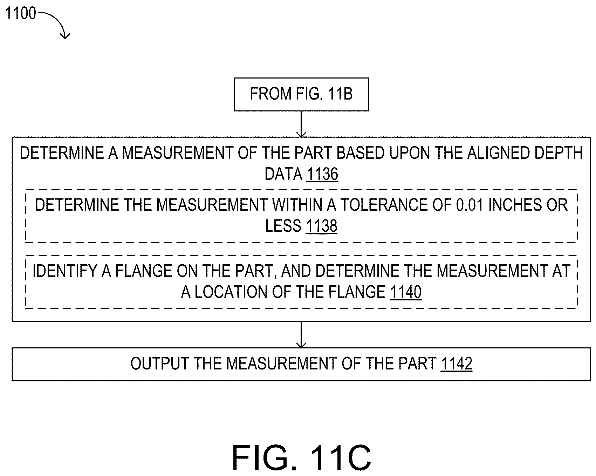

FIGS. 11A-11C show a flow diagram depicting an example method 1100 for obtaining a measurement of a part using depth data from a plurality of sensors. The following description of the method 1100 is provided with reference to the components described herein and shown in FIGS. 1-10 and 12. In some examples, the method 1100 is performed at the computing system 202 of FIG. 2. In other examples, the method 1100 can be performed in other contexts using other suitable components.

Referring first to FIG. 11A, at 1102, the method 1100 comprises positioning a first sensor and a second sensor at a predetermined cross-section of a part. For example, the depth sensors 102A, 102B, 102C, and 102D of FIG. 1 are positioned along the part 106 by the rails 110A and 110B.

In some examples, as indicated at 1104, the first sensor and the second sensor are located at fixed positions relative to one another. For example, the depth sensors 102A, 102B, 102C, and 102D of FIG. 1 are mounted to the ring 104 and the rails 110A and 110B, which maintain the depth sensors 102A, 102B, 102C, and 102D at fixed positions with respect to one another. This enables depth data output by each of the depth sensors to be calibrated and aligned.

At 1106, the method 1100 includes obtaining first depth data of a monument and a part from a first sensor and second depth data of the monument and the part from a second sensor. For example, the computing system 202 of FIG. 2 is configured to obtain at least the first depth data 206 from the first sensor 208 and the second depth data 210 from the second sensor 212. The depth sensors 102A, 102B, 102C, and 102D of FIG. 1 are examples of depth sensors suitable for use as the first sensor 208 and the second sensor 212.

In some examples, as indicated at 1108, the monument comprises at least three non-parallel faces. For example, the monument 108 of FIG. 1 comprises at least three non-parallel faces 116A, 116B, and 116C. These faces serve as references for alignment of the depth data.

At 1110, in some examples, the method 1100 includes obtaining the first depth data and the second depth data from a constellation of sensors at least partially surrounding the part. For example, the depth sensors 102A, 102B, 102C, and 102D of FIG. 1 are arranged in the ring 104 at least partially surrounding the part 106 and the monument 108. In this manner, the depth sensors obtain depth data from different perspectives, which can be merged in a common coordinate system.

In some examples, at 1112, obtaining the first depth data and the second depth data comprises obtaining the depth data from ten or more sensors. As described above, any other suitable number of depth sensors can be used, such as two, three, four, five, etc.

At 1114, in some examples, the method 1100 includes rotating one or more of the first depth data or the second depth data by an installation angle of a respective sensor before aligning the first depth data and the second depth data. For example, the computing system 202 of FIG. 2 is configured to use the first static preliminary alignment matrix 224A to rotate the first depth data 206 by the installation angle of the first depth sensor 208. Likewise, the second static preliminary alignment matrix 224B is used to rotate the second depth data 210 by the installation angle of the second depth sensor 212. This rotation approximates rotational alignment of the depth sensors suitably close to enable accurate plane detection and alignment.

In some examples, at 1116, the method 1100 comprises identifying one or more connected point clouds in the first depth data and the second depth data. For example, FIG. 3 shows the connected point cloud 302 comprising the plurality of coordinates 304. At 1118, the method 1100 comprises removing outliers from the one or more connected point clouds before aligning the first depth data and the second depth data. For example, FIG. 3 also shows the outliers 306 from the connected point cloud 302. This cleans the connected point cloud for further processing.

At 1120, the method 1100 comprises detecting a plurality of planes in the first depth data and the second depth data, wherein each plane of the plurality of planes corresponds to a corresponding face on the monument. For example, FIG. 4 shows the plurality of planes 308, 310, 312 that each corresponds to the corresponding faces 314, 316, 318, respectively, on the monument 320. Recognizing the planes in the depth data that correspond to specific faces on the monument enables the computing system to align the depth data to a common coordinate system.

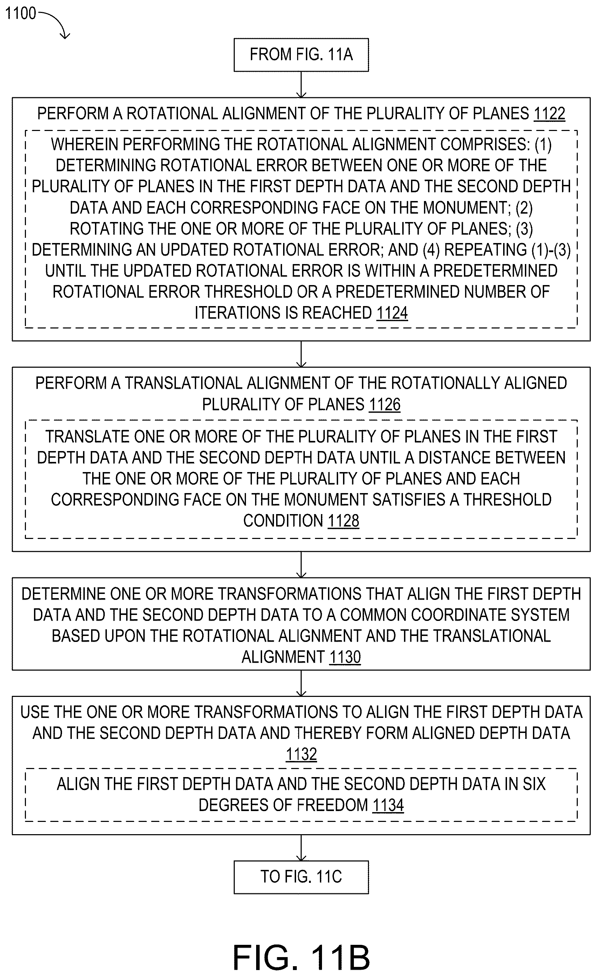

Referring now to FIG. 11B, at 1122, the method 1100 comprises performing a rotational alignment of the plurality of planes. For example, FIG. 5 shows the rotational alignment of the plane 312 to its corresponding face 318 on the monument 320.

In some examples, at 1124, performing the rotational alignment comprises: (1) determining rotational error between one or more of the plurality of planes in the first depth data and the second depth data and each corresponding face on the monument; (2) rotating the one or more of the plurality of planes; (3) determining an updated rotational error; and (4) repeating (1)-(3) until the updated rotational error is within a predetermined rotational error threshold or a predetermined number of iterations is reached. In this manner, the depth data is rotated until the detected planes are substantially parallel to their corresponding faces on the monument.

At 1126, the method 1100 comprises performing a translational alignment of the rotationally aligned plurality of planes. For example, FIG. 7 shows the translational alignment of the plane 312 with the corresponding face 318 on the monument 320. In this manner, the plane 312 is substantially superimposed on the corresponding face 318.

In some examples, at 1128, performing the translational alignment comprises translating one or more of the plurality of planes in the first depth data and the second depth data until a distance between the one or more of the plurality of planes and each corresponding face on the monument satisfies a threshold condition. For example, as described above, the threshold condition can include a shortest distance between each plane (e.g., a length of a normal vector) and its corresponding face. In this manner, the plane can be moved until it is located as close as possible to the monument.

At 1130, the method 1100 comprises determining one or more transformations that align the first depth data and the second depth data to a common coordinate system based upon the rotational alignment and the translational alignment. The method 1100 further comprises, at 1132, using the one or more transformations to align the first depth data and the second depth data and thereby form aligned depth data. For example, the computing system 202 is configured to determine the first transformation 234 and the second transformation 236 for the first depth data 206 and the second depth data 210, respectively. In this manner, the first depth data and the second depth data can be calibrated to a common coordinate system based upon the rotational and translational transformations applied to the plurality of planes.

In some examples, at 1134, using the one or more transformations to align the first depth data and the second depth data comprises aligning the first depth data and the second depth data in six degrees of freedom. For example, as described above, the rotational alignment can comprise a change in phi, psi, and/or theta in the coordinate system 326 of FIG. 3. The translational alignment can comprise a change in the x-, y-, and/or z-axis position in the coordinate system 326. In this manner, the position and the orientation of the first depth data and the second depth data can be aligned.

At 1136, the method 1100 comprises determining a measurement of the part based upon the aligned depth data. In some examples, at 1138, determining the measurement comprises determining the measurement within a tolerance of 0.01 inches or less. The measurement threshold can be a function of a manufacturing tolerance of the monument, the tolerance of the rotational alignment, and the tolerance of the translational alignment. Maintaining suitably low tolerances enables precise measurement of the part.

At 1140, in some examples, determining the measurement of the part comprises identifying a flange on the part, and determining the measurement at a location of the flange. For example, the part 106 of FIG. 1 comprises the first flange 118 and the second flange 120. A height of the part 106 can be measured by comparing a distance between the first flange 118 and the second flange 120.

The method 1100 further comprises, at 1142, outputting the measurement of the part. For example, the computing system 202 of FIG. 2 is configured to determine and output the measurement 240. As described above, the computing system 202 can package the measurement 240 in the inspection report 248, which can serve as a reference for the inspection of the part.

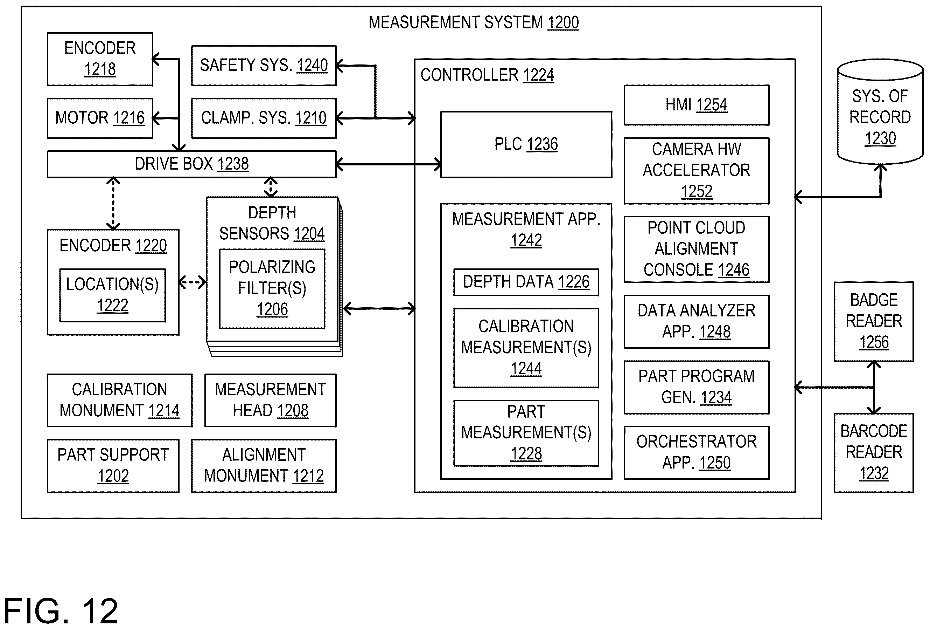

FIG. 12 schematically depicts another example measurement system 1200 for measuring a part. The measurement system 1200 comprises a part support 1202 and a plurality of depth sensors 1204. Here, the plurality of depth sensors 1204 are configured to image the part arranged on the part support 1202 from a sufficient number of different angles to acquire a desired measurement. Specifically, the plurality of depth sensors 1204 are arranged on a measurement head 1208. In some examples, the measurement head 1208 is configured to at least partially surround the part support 1202, as described above for FIG. 1.

One or more depth sensors from the plurality of depth sensors 1204 each can comprise one or more polarizing filters 1206. For example, a polarizing filter 1206 can be arranged over an emitter of the depth sensor 1204. Alternatively or additionally, a polarizing filter 1206 can be arranged over a sensor of the depth sensor 1204. The polarizing filter(s) 1206 can be used to help to reduce specular noise compared to a depth camera without such polarizing filters(s). In other examples, one or more other suitable optical filters, such as wavelength bandpass filters, can be used.

The measurement system 1200 includes a clamping system 1210 configured to hold the part along a scan path. The clamping system is configured to hold the part in a desired orientation for measuring. In some examples, the clamping system 1210 includes clamps controllable to extend/retract based upon a measurement plan for the part. In such examples, a subset of clamps can be selectively used to clamp the part that are placed at locations along the scan path that are different than measurement locations of the measurement plan. In such a configuration, the clamping system 1210 avoids occluding the measurement locations.

The measurement system 1200 additionally comprises an alignment monument 1212 for aligning the plurality of depth sensors 1204 to a common reference frame. For example, each depth sensor can scan the alignment monument, determine locations of alignment features of the monument from the scanned image data, compare the locations of the alignment features to expected locations, and determine a transformation matrix based upon any differences, where the transformation matrix transforms the determined locations of the alignment monument to the expected locations. Such an alignment determines a corresponding plurality of transformations of the plurality of depth sensors 1204. As a specific example, the alignment monument 1212 can comprise a cylindrical monument with one or more tooling balls. In other examples, another suitable alignment monument can be used.

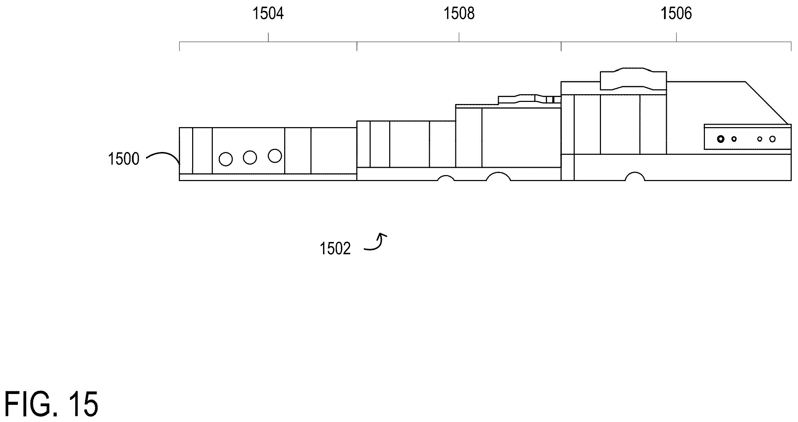

The measurement system 1200 also comprises a calibration monument 1214. The calibration monument 1214 can help validate the measurement accuracy of the plurality of depth sensors 1204. The calibration monument 1214 includes a plurality of features representative of geometries of parts to be scanned by the measurement system 1200. An example calibration monument is discussed in more detail with reference to FIG. 15.

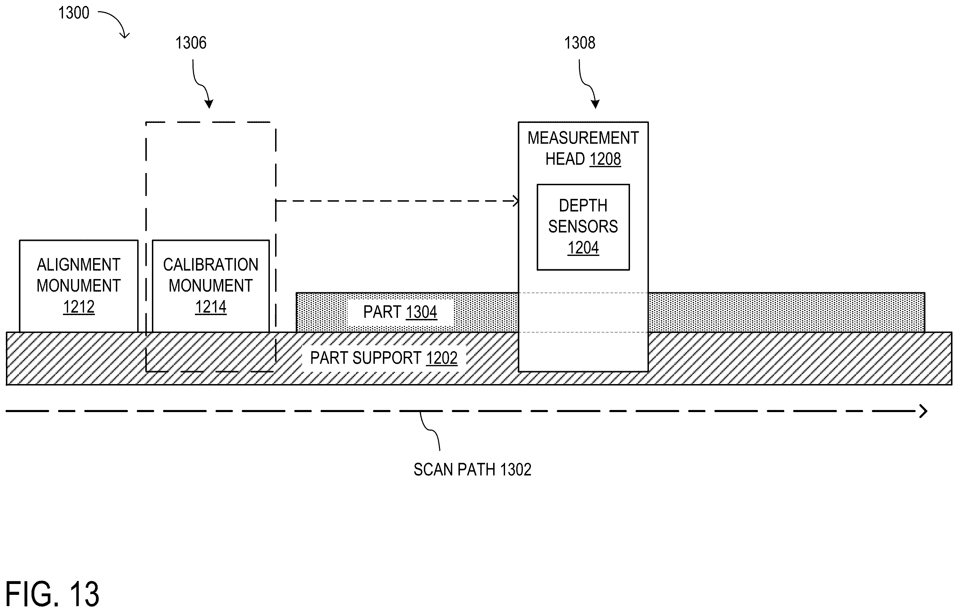

In some examples, the calibration monument 1214 and the alignment monument 1212 are arranged on and attached or connected to the part support 1202. An example of such an arrangement is discussed with reference to FIG. 13. In other examples, the calibration monument 1214 and/or the alignment monument 1212 can be arranged in another suitable manner along the scan path. In further examples, the alignment monument 1212 can be omitted.

The measurement system 1200 comprises a motor 1216 selectively controllable to change a location of the measurement head 1208, for example, along the part support 1202 and thus, along the scan path. The motor 1216 is operatively coupled to a first encoder 1218 to help control movement of the measurement head 1208. However, the first encoder 1218 might not have sufficient precision to provide the location of the measurement head 1208 within a desired tolerance. Therefore, the measurement system 1200 also can include a second encoder 1220 having a relatively higher precision than the first encoder 1218. Here, the second encoder 1220 is configured to provide a location 1222 of the measurement head 1208 along the scan path. In some examples, the location 1222 is provided in real time with operation of the plurality of depth sensors 1204. Such a configuration can help a plurality of the locations 1222 to be integrated with data from the depth sensors 1204. In various examples, the second encoder 1220 can include a magnetic encoder, an optical encoder, or another suitable encoder with sufficient precision and speed. Further, in other examples, a conveyor other than a motor can be used to move the measurement head 1208. Examples include magnetic levitation drive systems and pneumatic systems.

The measurement system 1200 further comprises a controller 1224. The controller 1224 is configured to obtain, from the plurality of depth sensors 1204, depth data 1226 of the alignment monument 1212, the calibration monument 1214, and/or the part. The depth data 1226 can include point clouds obtained in a scan, or other suitable format of depth data (e.g., a surface reconstruction). The controller 1224 is further configured to determine one or more part measurements 1228 of the part based at least upon the depth data 1226. In some examples, the controller 1224 can also obtain and utilize temperature data to determine the part measurement(s) 1228.

The controller 1224 can be configured to obtain dimensional information for a selected part from a system of record database 1230. Here, the selected part can be identified by a part identifier on the part, such as a barcode readable by a barcode reader 1232 or another suitable indicator. The dimensional information can include a measurement plan and/or other suitable information. Further, a part program generator 1234 is configured to generate instructions for a programable logic controller (PLC) 1236 to execute the measurement plan. For example, the instructions can include measurement locations, a clamp pattern for the clamping system 1210, and/or other suitable information. Additionally, a drive box 1238 communicates the instructions from the PLC 1236 to the motor 1216, the first encoder 1218, the second encoder 1220, and the plurality of depth sensors 1204. In some examples, the drive box 1238 can use a specified communication protocol. The drive box 1238 can further be configured to compare outputs from the first encoder 1218 and the second encoder 1220 for positional validation. Additionally, a safety system 1240 is configured to stop operation of the motor 1216 when communication is lost through the drive box 1238.

The controller 1224 further includes a measurement application 1242 for determining selected measurements from the depth data 1226. The measurement application 1242 obtains the depth data 1226, and obtains locations 1222 of the measurement head 1208 from the second encoder 1220. From the depth data 1226, the measurement application 1242 determines the part measurement(s) 1228 of the part. The controller 1224 further is configured to use depth data of the calibration monument 1214 to ensure the accuracies of the depth data acquired by the plurality of depth sensors 1204.

The controller 1224 further includes a point cloud alignment console 1246 for transforming the depth data 1226 from the individual scanners to the common coordinate system. As a specific example, point clouds from the depth data 1226 are transformed through use of at least the corresponding plurality of transformations of the plurality of depth sensors 1204. Therefore, the corresponding plurality of transformations can be used to determine the part measurement(s) 1228 and/or the calibration measurements 1244.

The controller 1224 further includes a data analyzer application 1248 for measuring, aligning, inspecting, analyzing, and/or reporting various information on the depth data 1226. As a specific example, the data analyzer application 1248 can determine relevant values from the part measurement(s) 1228 based at least upon the measurement plan for the part. Further, the data analyzer application 1248 provides suitable report(s), or other outputs, including the relevant values to the system of record database 1230. In some examples, the data analyzer application 1248 can include a spatial metrology software, a point cloud processing software, and/or other suitable software. The controller 1224 can optionally include an orchestrator application 1250 for interfacing between the measurement system 1200 and a management operations management system, for example, of an enterprise entity.

The controller 1224 further includes a camera hardware accelerator 1252 configured to perform processing tasks for the plurality of depth sensors 1204, for example, in real time during imaging. Such a configuration can help the plurality of depth sensors 1204 capture image data, such as performing various imaging processing algorithms, for example. As depicted, the controller 1224 also includes a user interface in the form of a human machine interface (HMI) 1254. In the current example, the HMI 1254 can authenticate or verify a user with a badge reader 1256 and/or other suitable authentication or verification mechanism.

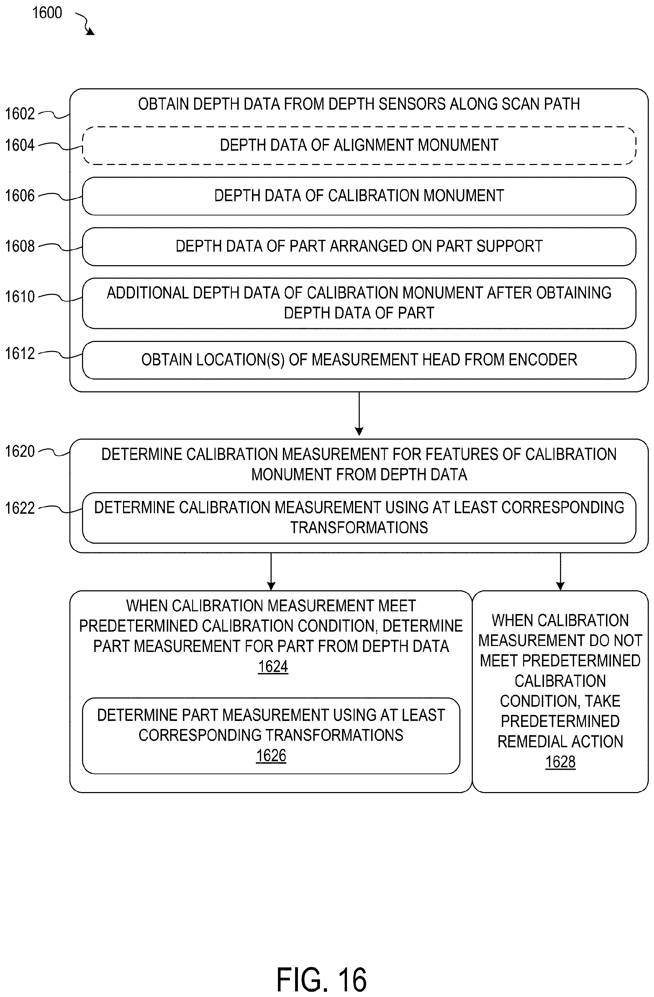

Further aspects of the controller 1224 are discussed with reference to FIG. 16. In various examples, the depicted components of the controller 1224 can be implemented on various combinations of computing devices that interact over a computer network. Further, one or more of the depicted components can be implemented using circuits, as instructions executable by a processor, or suitable combinations thereof. In other examples, a controller on a measurement system can have another configuration. In further examples, a measurement system can have additional components.

FIG. 13 schematically depicts an example arrangement 1300 of the part support 1202, the alignment monument 1212, and the calibration monument 1214 along a scan path 1302. Here, the scan path 1302 defines a direction of travel of the measurement head 1208 when scanning. Further, a part 1304 is arranged on the part support 1202. As can be seen, the alignment monument 1212 is arranged on the part support 1202 along the scan path 1302 and before the calibration monument 1214. The calibration monument 1214, in turn, is arranged before the part 1304. In such a configuration, the plurality of depth sensors 1204 can be controlled to obtain, in relative order, depth data of the alignment monument 1212, the calibration monument 1214, and the part 1304. In some examples, the alignment monument 1212 and the calibration monument 1214 can be attached to the part support 1202. Such a configuration enables the alignment monument 1212 and the calibration monument 1214 to be aligned to a common reference frame of the part support 1202. In other examples, the alignment monument 1212 and/or the calibration monument 1214 can be arranged in another suitable manner along the scan path 1302.

As discussed with reference to FIG. 12, the measurement head 1208 is selectively controllable to move along the scan path 1302. The depth sensors 1204 obtain depth data of the calibration monument 1214 when the measurement head 1208 is at a first location 1306 along the scan path 1302. The depth sensors 1204 further obtain the depth data of the part 1304 when the measurement head 1208 is at a second location 1308 along the scan path 1302. In some examples, after obtaining the depth data of the part 1304 along the scan path 1302, the measurement head 1208 can return to the first location 1306 to obtain additional depth data of the calibration monument 1214. The depth data of the calibration monument 1214 and the additional depth data can be used to help to detect whether drift has occurred in the plurality of depth sensors 1204 during a scan of the part 1304. FIG. 13 is illustrative, and other configurations also can be used.

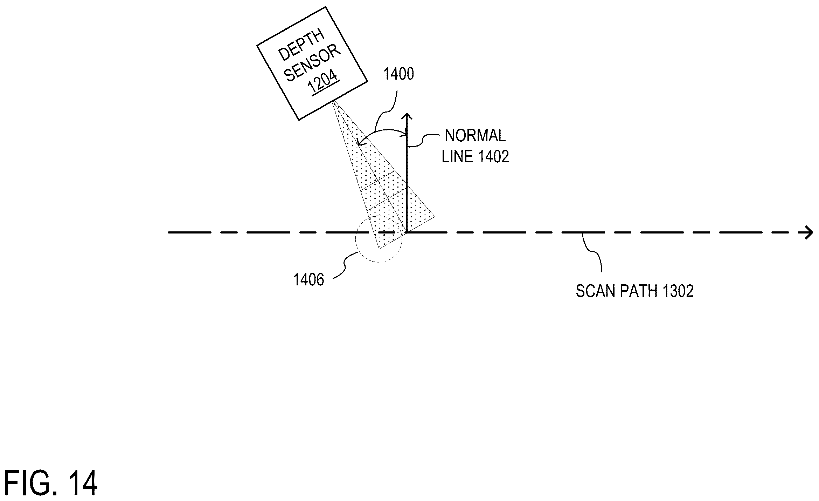

In some examples, a part can comprise a material with a relatively high reflectivity, such as a metal or alloy. In such examples, where laser light from a depth sensor is directed perpendicularly to a scan path, diffuse reflection may occur that results in blooming of depth sensor pixels, thereby resulting in noise in the image data. Additionally, the laser light may undergo multiple reflections within the geometry of the part, which can generate multipath interference. Therefore, in some examples, a depth sensor can be positioned to have a suitable angular offset to avoid such noise from specular reflection. FIG. 14 schematically illustrates an example angular offset 1400 for a depth sensor 1204. As depicted, the angular offset 1400 is relative to a normal line 1402 of the scan path 1302. In such a configuration, the depth sensor 1204 is tilted forward along the scan path 1302, with respect to the scan direction shown in FIG. 13. In some examples, the angular offset 1400 can be inclusive to a range of five to 15 degrees from the normal line 1402. In such a configuration, around a quarter to a third of a scan region of the depth sensor 1204 can be placed in the near field, as indicated by 1406. This can help to relatively reduce blooming issues arising from diffuse reflections on a reflective part and/or multipath interference.

Additionally, in some examples, the angular offset 1400 can be selectively controllable, for example, by the controller 1224. For example, the controller 1224 can change the angular offset 1400 as a function of measurement location when scanning the part. Such a configuration can help to relatively reduce blooming if a part geometry changes along a length of the part. In other examples, the angular offset 1400 can be fixed for the duration of a measurement plan. In further examples, one or more depth sensors from the plurality of depth sensors 1204 can comprise a different angular offset from the normal line 1402 of the scan path 1302 than other depth sensors from the plurality of depth sensors 1204.

As mentioned herein above, to help verify the accuracy of the part measurement(s), a calibration monument can be scanned to confirm that determined measurements suitably correspond to expected measurements. FIG. 15 schematically depicts an example calibration monument 1500 that can be utilized for validating the calibration of the measurement system. The calibration monument 1500 is an example implementation of the calibration monument 1214. Here, the calibration monument 1500 includes a plurality of features 1502 that are representative of part geometry on a part. As a specific example, the part geometry includes various surfaces of the part that are to be scanned to determine the part measurement(s). Examples of the part geometry include a thickness of a web on an aircraft stringer or a center portion of an I-beam, dimensions of a pad, depth of a channel, and other suitable geometries. In various examples, the plurality of features 1502 can represent part geometry of a single style of part or of multiple different styles of parts.

The part geometry can have associated tolerances that are to be inspected. Therefore, the plurality of features 1502 can comprise features of more than one measurement scale. In the current example, a portion of the plurality of features 1502 are formed in a minimum scale, for example, at a lower dimension of the associated tolerances, as indicated at 1504. Further, another portion of the plurality of features 1502 are formed in a maximum scale, for example, at an upper dimension of the associated tolerances, as indicated at 1506. A remainder portion of the plurality of features 1502 are formed in a dimension at the mid-range of the associated tolerances, as indicated at 1508. In such a configuration, the calibration monument 1500 reflects a range of values that are sufficient for the associated tolerances of the part geometry on the part. The calibration monument 1500 is illustrative. In other examples, a calibration monument can have another configuration.

FIG. 16 shows a flowchart of an example method 1600 for operating a measurement system for measuring a part. For example, the method 1600 can be performed on the measurement system 1200. The method 1600 comprises obtaining, from a plurality of depth sensors, depth data along a scan path, as indicated at 1602. In some examples, obtaining the depth data can comprise obtaining depth data of an alignment monument arranged along the scan path, as indicated at 1604. Additionally or alternatively, obtaining the depth data can comprise obtaining the depth data of a calibration monument arranged along the scan path, as indicated at 1606.

Obtaining the depth data comprises obtaining the depth data of the part arranged on a part support along the scan path, as indicated at 1608. In some examples, obtaining the depth data of the calibration monument is performed prior to obtaining the depth data of the part. In some such examples, obtaining the depth data can comprise further obtaining additional depth data of the calibration monument after obtaining the depth data of the part, as indicated at 1610. The additional depth data of the calibration monument can help to determine whether drift occurred while scanning the part. In other examples, the depth data of the part can be obtained prior to obtaining the depth data of the calibration monument.

In some examples, the measurement system comprises an additional encoder with a relatively higher precision than an encoder associated with a motor driving movement of the monument head. In such examples, obtaining the depth data from the plurality of depth sensors can comprise obtaining one or more locations of the measurement head from the encoder, as indicated at 1612. This can help to increase a precision of determined locations along the scan path for the depth data, as discussed above with reference to FIG. 12.

As discussed with reference to FIG. 15, the calibration monument includes a plurality of features, for example, that are representative of part geometry on the part. In other examples, a calibration monument can include other suitable features. Returning, the method 1600 comprises, at 1620, determining a calibration measurement for the plurality of features of the calibration monument from the depth data. In some examples, determining the calibration measurement comprises using at least a plurality of corresponding transformations of the plurality of depth sensors, as indicated at 1622. The plurality of corresponding transformations can be determined using the alignment monument. Such transformations help to align the depth data from the plurality of depth sensors to a common reference frame of the part support.

When the calibration measurement meets the predetermined calibration condition, method 1600 comprises determining a part measurement for the part from the depth data. In some examples, additional part measurements also can be determined. These part measurements can be used as part of an inspection procedure for the part as disclosed herein. In some examples, determining the part measurement can comprise using at least the corresponding plurality of transformations in a likewise manner as the calibration measurement, as indicated at 1626. When the calibration measurement does not meet the predetermined calibration condition, the method 1600 comprises taking a predetermined remedial action, as indicated at 1628. Here, the predetermined remedial action can comprise performing a calibration procedure, determining a compensation model, or another suitable action or actions.

Therefore, a measurement system as disclosed herein can help to enable automated inspections of a part. Such an automated process can significantly reduce the time to perform a measurement plan on the part as compared to current part inspections involving human visual inspection and manual measurement. Additionally, a calibration monument can be used to validate a calibration of one or more depth sensors on the measurement system as part of the measurement plan. Likewise, an alignment monument can be used to help align the depth sensors. These monuments can help to relatively increase reliability of the part measurement(s) determined by the measurement system.

In some embodiments, the examples described herein can be tied to a computing system of one or more computing devices. In particular, aspects of such methods and processes can be implemented as a computer-application program or service, an API, a library, and/or other computer-program product.

FIG. 17 schematically shows a non-limiting embodiment of a computing system 1700 that can enact one or more of the examples described above. For example, computing system 1700 can be used to execute instructions to perform the method 1100 of FIGS. 11A-11C, the method 1600 of FIG. 16, and/or potentially perform other functions.

Computing system 1700 is shown in simplified form. Computing system 1700 can take the form of one or more personal computers, server computers, tablet computers, network computing devices, mobile computing devices, mobile communication devices (e.g., smart phones), and/or other computing devices. In some examples, the computing system 202 of FIG. 2 comprises one or more aspects of the computing system 1700. Likewise, the controller 1224 of FIG. 12 can comprise one or more aspects of the computing system 1700, in some examples.

Computing system 1700 includes a logic subsystem 1702, a storage subsystem 1704, and an optional display subsystem 1706. Computing system 1700 can optionally include an input subsystem 1708, a communication subsystem 1710, and/or other computing-related components not shown in FIG. 17.

Logic subsystem 1702 includes one or more physical devices configured to execute instructions. For example, logic subsystem 1702 can be configured to execute instructions that are part of one or more applications, services, programs, routines, libraries, objects, components, data structures, or other logical constructs. Such instructions can be implemented to perform a task, implement a data type, transform the state of one or more components, achieve a technical effect, or otherwise arrive at a desired result. For example, logic subsystem 1702 can be used to execute instructions to perform the method 1100 of FIGS. 11A-11C and/or the method 1600 of FIG. 16.

Logic subsystem 1702 can include one or more processors configured to execute software instructions. Additionally or alternatively, logic subsystem 1702 can include one or more hardware or firmware logic machines configured to execute hardware or firmware instructions. Processors of logic subsystem 1702 can be single-core or multi-core, and the instructions executed thereon can be configured for sequential, parallel, and/or distributed processing. Individual components of logic subsystem 1702 optionally can be distributed among two or more separate devices, which can be remotely located and/or configured for coordinated processing. Aspects of logic subsystem 1702 can be virtualized and executed by remotely accessible, networked computing devices configured in a cloud-computing configuration.

Storage subsystem 1704 includes one or more physical devices configured to hold instructions executable by logic subsystem 1702 to implement the methods and processes described herein. For example, storage subsystem 1704 can hold instructions executable to perform the method 1100 of FIGS. 11A-11C, the method 1600 of FIG. 16, and/or potentially perform other functions. When such methods and processes are implemented, the state of storage subsystem 1704 can be transformed-e.g., to hold different data.

Storage subsystem 1704 can include removable and/or built-in devices. Storage subsystem 1704 can include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage subsystem 1704 can include volatile, nonvolatile, dynamic, static, read/write, read-only, random-access, sequential-access, location-addressable, file-addressable, and/or content-addressable devices.

It will be appreciated by those of ordinary skill in the art, without undue experimentation, that storage subsystem 1704 includes one or more physical devices. However, aspects of the instructions described herein alternatively may be propagated by a communication medium (e.g., an electromagnetic signal, an optical signal, etc.) that is not held by a physical device for a finite duration.

Aspects of logic subsystem 1702 and storage subsystem 1704 can be integrated together into one or more hardware-logic components. Such hardware-logic components can include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

When included, a display subsystem 1706 can be used to present a visual representation of data held by storage subsystem 1704. This visual representation can take the form of a graphic user interface (GUI). As the herein described methods and processes change the data held by the storage subsystem 1704, and thus transform the state of the storage machine, the state of display subsystem 1706 can likewise be transformed to visually represent changes in the underlying data.

When included, a display subsystem 1706 can include one or more display devices utilizing virtually any type of technology. Such display devices can be combined with logic subsystem 1702 and/or storage subsystem 1704 in a shared enclosure, or such display devices can be peripheral display devices.

When included, input subsystem 1708 can comprise or interface with one or more user-input devices such as a keyboard, mouse, touch screen, or joystick. In some embodiments, the input subsystem 1708 can comprise or interface with selected natural user input (NUI) componentry. Such componentry can be integrated or peripheral, and the transduction and/or processing of input actions can be handled on- or off-board. Example NUI componentry can include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, and without respect to the dynamic and reconfigurable communication system described above, the communication subsystem 1710 can be configured to communicatively couple computing system 1700 with one or more other computing devices. Communication subsystem 1710 can include wired and/or wireless communication devices compatible with one or more different communication protocols. As non-limiting examples, the communication subsystem can be configured for communication via a wireless telephone network, or a wired or wireless local- or wide-area network. In some embodiments, communication subsystem 1710 can allow computing system 1700 to send and/or receive messages (e.g., the first depth data 206, the second depth data 210, or the measurement 240) to and/or from other devices via a network such as the Internet. For example, communication subsystem 1710 can be used to receive or send data to another computing system. As another example, communication subsystem may be used to communicate with other computing systems, such as during execution of method 1100 in a distributed computing environment.

Further, the disclosure comprises configurations according to the following clauses.

Clause 1. A measurement system for a part, the measurement system comprising a part support arranged along a scan path, a measurement head, a plurality of depth sensors arranged on the measurement head, and a calibration monument arranged along the scan path. The calibration monument including a plurality of features representative of part geometry on the part. The measurement system further comprising a controller configured to obtain, from the plurality of depth sensors, depth data of the calibration monument and the part along the scan path, determine a calibration measurement for the plurality of features of the calibration monument from the depth data, and, when the calibration measurement meet a predetermined calibration condition, determine a part measurement for the part from the depth data.

Clause 2. The measurement system of clause 1, wherein the controller is further configured to take a predetermined remedial action when the calibration measurement does not meet the predetermined calibration condition.

Clause 3. The measurement system of clause 1 or 2, wherein at least some features from the plurality of features of the calibration monument are formed in more than one measurement scale.

Clause 4. The measurement system of any preceding clause, wherein the controller is configured to obtain depth data of the calibration monument and the part by further obtaining additional depth data of the calibration monument after obtaining the depth data of the part.

Clause 5. The measurement system of any preceding clause, further comprising an encoder configured to provide a location of the measurement head along the scan path, and wherein the controller is configured to obtain the depth data by obtaining one or more locations of the measurement head from the encoder.

Clause 6. The measurement system of any preceding clause, wherein at least a first depth sensor from the plurality of depth sensors comprises one or more polarizing filters.

Clause 7. The measurement system of any preceding clause, wherein at least a first depth sensor from the plurality of depth sensors comprises an angular offset from a normal line to the scan path.

Clause 8. The measurement system of any preceding clause, wherein the controller is configured to determine the calibration measurement and the part measurement through use of at least a corresponding plurality of transformations of the plurality of depth sensors.

Clause 9. A measurement system for a part, comprising a part support arranged along a scan path, a measurement head, and a plurality of depth sensors arranged on the measurement head. Wherein at least a first depth sensor from the plurality of depth sensors comprises an angular offset from a normal line to the scan path. The measurement system further comprising a controller configured to obtain, from the plurality of depth sensors, depth data of the part arranged on the part support along the scan path.

Clause 10. The measurement system of clause 9, wherein the controller is further configured to change the angular offset for different measurement locations along the part.

Clause 11. The measurement system of clause 9 or 10, wherein one or more depth sensors of the plurality of depth sensors comprise a different angular offset from the normal line to the scan path compared to one or more other depth sensors from the plurality of depth sensors.

Clause 12. The measurement system of any of clauses 9 to 11, further comprising a calibration monument arranged along the scan path, the calibration monument including a plurality of features representative of part geometry on the part, and wherein the controller is further configured to obtain depth data of the calibration monument from the plurality of depth sensors, determine a calibration measurement for the plurality of features from the depth data of the calibration monument, when the calibration measurement meets a predetermined calibration condition, determine a part measurement for the part from the depth data, and when the calibration measurement does not meet the predetermined calibration condition, take a predetermined remedial action.

Clause 13. The measurement system of clause 12, wherein the controller is configured to determine the calibration measurement and the part measurement through use of at least a corresponding plurality of transformations for the plurality of depth sensors.

Clause 14. The measurement system of any of clauses 9 to 13, further comprising an encoder configured to provide a location of the measurement head along the scan path, and wherein the controller is configured to obtain the depth data by obtaining one or more locations of the measurement head from the encoder.

Clause 15. The measurement system of any of clauses 9 to 14, wherein the first depth sensor comprises one or more polarizing filters.

Clause 16. A measurement system for a part, comprising a part support arranged along a scan path, a measurement head, a plurality of depth sensors arranged on the measurement head. Wherein at least a first depth sensor from the plurality of depth sensors comprises an angular offset from a normal line to the scan path. The measurement system further comprises a calibration monument arranged along the scan path. The calibration monument including a plurality of features representative of part geometry on the part. The measurement system further comprises an alignment monument arranged along the scan path, and a controller configured to obtain, from the plurality of depth sensors, depth data of the alignment monument and the calibration monument, determine a calibration measurement for the plurality of features of the calibration monument from the depth data through use of at least a corresponding plurality of transformations for the plurality of depth sensors, the corresponding plurality of transformations being based at least upon the depth data of the alignment monument, and when the calibration measurement do not meet a predetermined calibration condition, take a predetermined remedial action.

Clause 17. The measurement system of clause 16, wherein the controller is further configured to obtain, from the plurality of depth sensors, depth data of the part arranged on the part support along the scan path, and when the calibration measurement meets the predetermined calibration condition, determine a part measurement for the part from the depth data through use of at least the corresponding plurality of transformations.

Clause 18. The measurement system of clause 17, wherein the controller is configured to obtain the depth data by further obtaining additional depth data of the calibration monument after obtaining the depth data of the part.

Clause 19. The measurement system of any of clauses 16 to 18, wherein the alignment monument is arranged before the calibration monument along the scan path, and the part is arranged after the calibration monument along the scan path.

Clause 20. The measurement system of any of clauses 16 to 19, wherein at least the first depth sensor from the plurality of depth sensors comprises one or more polarizing filters.

This disclosure is presented by way of example and with reference to the associated drawing figures. Components, process steps, and other elements that can be substantially the same in one or more of the figures are identified coordinately and are described with minimal repetition. It will be noted, however, that elements identified coordinately can also differ to some degree. It will be further noted that some figures can be schematic and not drawn to scale. The various drawing scales, aspect ratios, and numbers of components shown in the figures can be purposely distorted to make certain features or relationships easier to see.

"And/or" as used herein is defined as the inclusive or V, as specified by the following truth table:

| A | B | AVB |
|---|---|---|
| True | True | True |
| True | False | True |
| False | True | True |
| False | False | False |

The terminology "one or more of A or B" as used herein comprises A, B, or a combination of A and B. The terminology "one or more of A, B, or C" is equivalent to A, B, and/or C. As such, "one or more of A, B, or C" as used herein comprises A individually, B individually, C individually, a combination of A and B, a combination of A and C, a combination of B and C, or a combination of A, B and C.

It will be understood that the configurations and/or approaches described herein are exemplary in nature, and that these specific embodiments or examples are not to be considered in a limiting sense, because numerous variations are possible. The specific routines or methods described herein can represent one or more of any number of strategies. As such, various acts illustrated and/or described can be performed in the sequence illustrated and/or described, in other sequences, in parallel, or omitted. Likewise, the order of the above-described processes can be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A measurement system (1200) for a part (106, 902, 1304), the measurement system (1200) comprising:
a part support (1202) arranged along a scan path (1302) (1302);
a measurement head (1208);
a plurality of depth sensors (102A, 102B, 1204) arranged on the measurement head (1208);
a calibration monument (1214, 1500) arranged along the scan path (1302) (1302), the calibration monument (1214, 1500) including a plurality of features (1502) representative of part geometry on the part (106, 902, 1304); and
a controller (1224) configured to obtain, from the plurality of depth sensors, depth data of the calibration monument and the part along the scan path (1602), determine a calibration measurement for the plurality of features of the calibration monument from the depth data (1620), and, when the calibration measurement meets a predetermined calibration condition, determine a part measurement for the part from the depth data (1624).

2. The measurement system (1200) of claim 1, wherein the controller (1224) is further configured to take a predetermined remedial action when the calibration measurement does not meet the predetermined calibration condition (1628).

3. The measurement system (1200) of claim 1 or 2, wherein at least some features (1502) from the plurality of features (1502) of the calibration monument (1214, 1500) are formed in more than one measurement scale.

4. The measurement system (1200) of any preceding claim, wherein the controller (1224) is configured to obtain depth data of the calibration monument and the part by further obtaining additional depth data of the calibration monument after obtaining the depth data of the part (1610).

5. The measurement system (1200) of any preceding claim, further comprising an encoder (1220) configured to provide a location (1222, 1306, 1308) of the measurement head (1208) along the scan path (1302), and wherein the controller (1224) is configured to obtain the depth data by obtaining one or more locations of the measurement head from the encoder (1612).

6. The measurement system (1200) of any preceding claim, wherein at least a first depth sensor from the plurality of depth sensors (102A, 102B, 1204) comprises one or more polarizing filters (1206).

7. The measurement system (1200) of any preceding claim, wherein at least a first depth sensor from the plurality of depth sensors (102A, 102B, 1204) comprises an angular offset (1400) from a normal line (1402) to the scan path (1302).

8. The measurement system (1200) of any preceding claim, wherein the controller (1224) is configured to determine the calibration measurement and the part measurement through use of at least a corresponding plurality of transformations of the plurality of depth sensors (1622, 1626).

9. The measurement system (1200) for a part (106, 902, 1304) of claim 1,
wherein at least a first depth sensor from the plurality of depth sensors (102A, 102B, 1204) comprises an angular offset (1400) from a normal line (1402) to the scan path (1302);
the measurement system for a part further comprising an alignment monument (1212) arranged along the scan path (1302); and
the controller (1224) being further configured to
obtain, from the plurality of depth sensors, depth data of the alignment monument,
determine the calibration measurement for the plurality of features of the calibration monument from the depth data through use of at least a corresponding plurality of transformations for the plurality of depth sensors, the corresponding plurality of transformations being based at least upon the depth data of the alignment monument (1620), and
when the calibration measurement does not meet a predetermined calibration condition, take a predetermined remedial action (1628).

10. The measurement system (1200) of claim 9, wherein when the calibration measurement meets the predetermined calibration condition, determine the part measurement for the part from the depth data through use of at least the corresponding plurality of transformations (1624).

11. The measurement system (1200) of claim 10, wherein the controller (1224) is configured to obtain the depth data by further obtaining additional depth data of the calibration monument after obtaining the depth data of the part (1610).

12. The measurement system (1200) of any of claims 9 to 11, wherein the alignment monument (1212) is arranged before the calibration monument (1214, 1500) along the scan path (1302), and the part (106, 902, 1304) is arranged after the calibration monument (1214, 1500) along the scan path (1302).

13. The measurement system (1200) of any of claims 9 to 12, wherein at least the first depth sensor from the plurality of depth sensors (102A, 102B, 1204) comprises one or more polarizing filters (1206).

14. The measurement system (1200) of any of claims 9 to 13, further comprising a clamping system (1210) configured to hold the part (106, 902, 1304) along the scan path (1302); and additionally
wherein the clamping system (1210) is configured to hold the part (106, 902, 1304) in a desired orientation for measuring.

15. The measurement system (1200) of claim 14, wherein the clamping system (1210) includes clamps controllable to extend/retract based upon a measurement plan for the part (106, 902, 1304).
